# EUROPEAN PATENT APPLICATION

(11) **EP 1 435 596 A1**
(43) Date of publication of application: **07.07.2004**
(21) Application number: 03104711.1
(22) Date of filing: 16.12.2003
(51) Int. Cl.: G07F 7/00

(54) **System and method for providing fee-based data services to mobile users**

(30) Priority: 02.01.2003 US 437644 P
(71) Applicant: Toshiba Corporation, Mishima-shi, Shizuoka 411-8520 (JP)
(72) Inventor: SINGH, Hapreet, 92867, Orange (US); ORMOND, Louis, 92618, Irvine (US); MATTHEWS, Mark, 92692, Mission Viejo (US)
(74) Representative: Harding, Richard Patrick

(57) **Abstract**

A system 200 is provided to allow users 210 in a non-office environment to access and use data services, such as scanning, printing, and distribution of documents and data, and to charge the users for such services. Multifunctional peripheral devices are provided to service location providers 204 for use by mobile users 210. A multifunctional peripheral device provider 202 sells or leases the multifunctional peripheral devices, related hardware and software, parts, and supplies to service location providers 204. The service location providers 204 then provide access to the multifunction peripheral devices and related services to mobile users 210. The users 210 are then charged for the services used. The fees are paid to the multifunctional peripheral device provider 202. At least a portion of these fees are paid to any dealers 206 involved in the sale or lease of the multifunctional peripheral device and to the service location providers 204. Any fees related to the sale or installation of the multifunctional peripheral devices are also paid to the multifunctional peripheral device provider 202. At least a portion of these fees is paid to any dealers 206 involved in the sale or lease of the multifunctional peripheral devices.

## Description

This invention is directed to a system and method for providing fee- based data services to mobile users. More particular, this invention is directed to a system and method to allow users in a non-office environment to access and use data services, such as scanning, printing, and distribution of documents and data and to charge the users for such services.

Typically, professionals routinely work with documents or other data while away from their office environment. These professionals need to generate image data, by printing or scanning a document, and then to need to distribute or perform other functions on such image data. Multifunctional peripheral devices, such as printers and scanning devices, routinely perform such operations. However, there is no easy or cost effective way for these mobile professionals to use these existing technologies in a non-office environment or a public facility.

There is a need for system and method to provide fee-based data services to mobile users.

In accordance with the present invention, there is provided a system and method for providing fee-based data services to mobile users.

Further, in accordance with the present invention, there is provided a system and method to allow users in a non office environment to access and use data services, such as scanning, printing, and distribution of documents and data and to charge the users for such services.

In the present invention, a mobile user is provided access to a multifunctional peripheral device in a non-office environment, such an airport lounge or hotel business center. The user is provided information about the various services available, such as scanning, printing, distribution, optical character recognition, and the available payment options. The user selects the appropriate payment option. The user then provides selected information about the service the user wants to be performed. The user is then presented with the total cost of the service. Upon the user accepting the charges, the service is performed. The details of the transaction are archived and the user is billed for the service.

Further, in accordance with the present invention, there is provided a system and method for supplying multifunctional peripheral devices to service location providers for use by mobile users. In the present invention, a multifunctional peripheral device provider, such as multifunctional peripheral device manufacturer or partner, sells or leases the multifunctional peripheral device, related hardware and software, parts, and supplies to service location providers. The service location provider then provides access to the multifunction peripheral device and related services to mobile users. The user is then charged for the services used. The fees are paid to the multifunctional peripheral device provider. At least a portion of these fees are paid to any dealers involved in the sale or lease of the multifunctional peripheral device and to the service location providers. Any fees related to the sale or installation of the multifunctional peripheral device is also paid to the multifunctional peripheral device provider. At least a portion of these fees is paid to any dealers involved in the sale or lease of the multifunctional peripheral device.

These and other advantages, aspects, and features will be understood by one of ordinary skill in the art upon reading and understanding the specification.

In order that the invention may be more fully understood, reference will now made, by way of example, to the accompanying drawings, in which:
Figure 1 is a diagram illustrating a system for providing fee-based data services to mobile users according to the present invention.
Figure 2 is a diagram illustrating one embodiment for supplying multifunctional peripheral devices to service location providers in order to provide fee-based data services to mobile users according to the present invention.
Figure 3 is a diagram illustrating another embodiment for supplying multifunctional peripheral devices to service location providers in order to provide fee-based data services to mobile users according to the present invention.

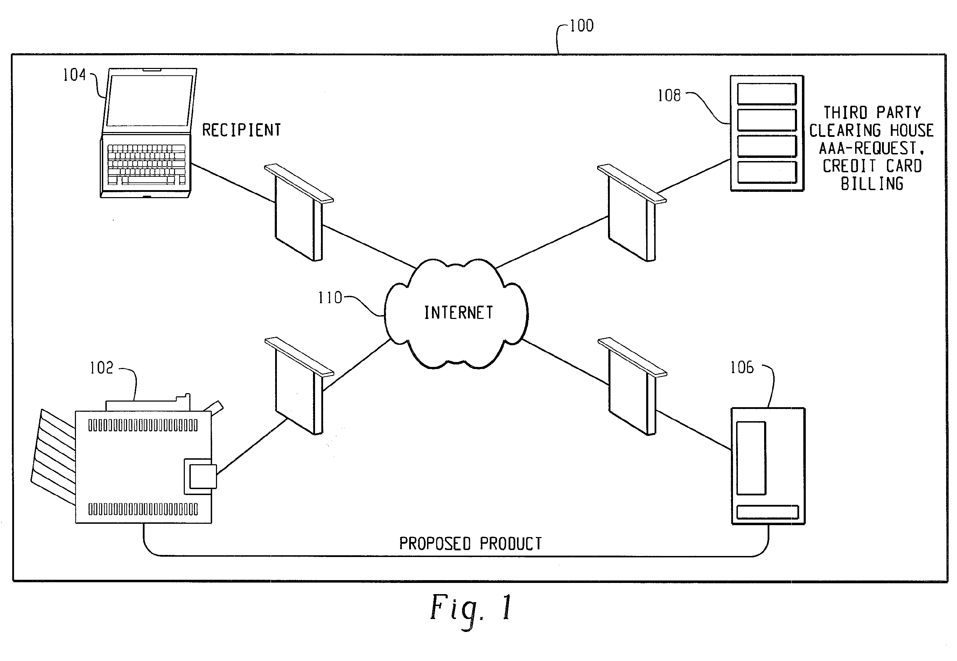

The present invention is directed to a system and method for providing fee-based data services to mobile users. A diagram illustrating the system 100 is shown in Figure 1. In the present invention, a mobile user is provided access to a multifunctional peripheral device 102 in a non-office environment, such as an airport lounge or business center. Other non-office environment locations include, but limited to, university campuses, conference centers, libraries, and hotels. The user accesses the multifunctional peripheral device 102 directly or via a computer 104 via a suitable communication link 110. In another embodiment, the user access the multifunctional peripheral via a wireless device and connect using at least one of BlueTooth^{TM} standard, 802.11g (WiFi) and other 802.11 compliant devices. The multifunctional peripheral is connected to an associated central server 106 via a suitable communication link, such as the Internet. The user is then provided with information about the services available to be performed. The information is provided in any suitable manner known in the art. The information may be provided by way of a user interface associated with the multifunctional peripheral device or documentation provided related thereto.

The services provided to the user are those typically provided by multifunctional peripheral devices and associated software. In one embodiment, the system allows the user to generate or receive image data using the multifunctional peripheral device and then stores or archives such image data in an associated repository. In another embodiment, the system allows the user to generate or receive image data using the multifunctional peripheral device, perform optical character recognition on the image data, and then transmit the image data to at least one selected destination. In a further embodiment, the system allows the user to generate or receive image data and then distribute the image data to at least one selected destination. In yet another embodiment, the system allows the user to generate or receive image data and then to print the image data according to the parameters selected by the user.

The user is then provided with information about the availabb payment options for paying for the desired services. The payment options include any suitable payment options known in the art for charging for mobile fee-based services. Suitable payment options include, but are not limited to, credit cards, prepaid accounts, coupons, and partner accounts. These payment options can be suitably group accounts and individual accounts. The user then selects the desired payment option from the options provided. The requirements for paying the fees depend on the payment option selected. If the user selects the credit card option, the user is prompted to provide selected information about the user's credit card, such as credit card type, credit card number, the credit card holder's name, and the expiration date. The information is provided by the user by any suitable means known in the art. Examples of such input are by direct user input via a keyboard interface or the like, or by access to a pre-stored information on a memory device or an intelligent card. The information is then sent to the central server via the communication link for authentication and approval from the credit card company shown as 108. Such information is provided by the central server to the credit card company by any suitable method known in the art. The authentication of the information and the transaction approval is provided by any suitable method known in the art. Preferably, the user is informed of the status of the approval. Preferably, if the transaction is not approved, the user is requested to submit information for an alternative credit card. In one embodiment, the user's credit card is charged for every transaction at the time of the transaction. In another embodiment, the user's credit card is charged for the transactions monthly or other suitable periodic interval.

If the user selects the prepaid account option, the user is prompted to open a prepaid account by a suitable method known in the art. Preferably, the user is prompted to open the prepaid account via a web-enabled user interface at specified URL that is served by the central server. The user provides selected information about a credit card or other type of debit card to open the account. Upon authentication of the information and approval of the use of the credit card by any suitable means, the user is issued an account identification and associated password for the account. Information about the account is maintained in any suitable database or repository, preferably, on the central server. In one embodiment, the balance maintained in the user account is debited every time the user accesses services on the system. In another embodiment, the balance is debited every month or other suitable periodic interval. The user may replenish the account by any suitable means at any time.

If the user selects the coupon option, the user is prompted to provide selected information about the coupons, such as the coupon issuer and the coupon number. This information is sent to the central server by any suitable means known in the art. The authentication of the information and the transaction approval is provided by any suitable method known in the art. Preferably, the user is informed of the status of the approval. Preferably, if the transaction is not approved, the user is requested to correct the information or provide alternative information. Preferably, the user is provided information about any applicable limits or restrictions on services associated with the use of the coupons, such as the number of pages printed.

If the user selects the partner account option, the user is prompted to selected a third party account provider from a list of available options by any suitable means. Examples of partner accounts, include, but are not limited to, Sprint PCS, AOL, Liberty Alliance, MS Passport, and AT&T. The user is prompted to provide selected information about the account, such as the account or user identification, and password. The information is provided to the central server by any suitable means known in the art. Such information is provided by the central server to the partner company by any suitable method known in the art. The authentication of the information and the transaction approval is provided by any suitable method known in the art. Preferably, the user is informed of the status of the approval. Preferably, if the transaction is not approved, the user is requested to correct the information or provide alternative information. In one embodiment, the user's account is charged for every transaction at the time of the transaction. In another embodiment, the user's account is charged for the transactions monthly or other suitable periodic interval.

After selecting the desired payment option, the user is prompted to provide selected information about the desired service to be performed. If the user desires generate or receive image data using the multifunctional peripheral device and then stores or archives such image data in an associated repository, the user is prompted to provide information related to the repository. For example, the user is requested to provide the name or URL of the repository, the user identification, password, and duration that the information is to be stored in the repository. If the user desires to generate or receive image data using the multifunctional peripheral device, perform optical character recognition on the image data, and transmit the image data to at least one selected destination, the user is prompted to provide information about the parameters for performing the optical character recognition and about the at least one destination. If the user desires to generate or receive image data and then transmit the image data to at least one selected destination, the user is prompted to provide information about the at least one destination. If the user desires to generate or receive image data and then print the image data, the user is prompted to provide information about the parameters for printing the image data.

The user is then prompted to select the desired parameters for generating or receiving the image data. For example, if the user is scanning a document, the user suitably provides information about the type of scan, the rotation, the exposure, size, and related information. After receiving such information, the system starts generating or receiving the image data. Preferably, after generating or receiving the image data, the system provides the user with the total cost associated with the selected services. It is understood however, that the total cost associated with the selected services may be provided to the user prior to generating or receiving the image data. Once the user has accepted the services by any suitable means known in the art, the services are performed. Preferably, the system provides a report of the status of the services to the user. Preferably, the user can view the results and make any needed changes to the services if the results are not acceptable. Information relating to the services is stored an associated repository, preferably located on the central server. The user is then billed for the services performed depending on the payment option selected by any suitable means known in the art. Preferably, a receipt is provided to the user upon completion of the services desired.

The present invention is further directed to a system and method for supplying multifunctional peripheral devices to service location providers for use by mobile users. In the present invention, a multifunctional peripheral device provider, such as multifunctional peripheral device manufacturer or partner, sells or leases the multifunctional peripheral device, related hardware and software, parts, and supplies to service location providers. The service location provider then provides access to the multifunction peripheral device and related services to mobile users. The user is then charged for the services used. The fees are paid to the multifunctional peripheral device provider. At least a portion of these fees are paid to any dealers involved in the sale or lease of the multifunctional peripheral device and to the service location providers. Any fees related to the sale or installation of the multifunctional peripheral device is also paid to the multifunctional peripheral device provider. At least a portion of these fees is paid to any dealers involved in the sale or lease of the multifunctional peripheral device.

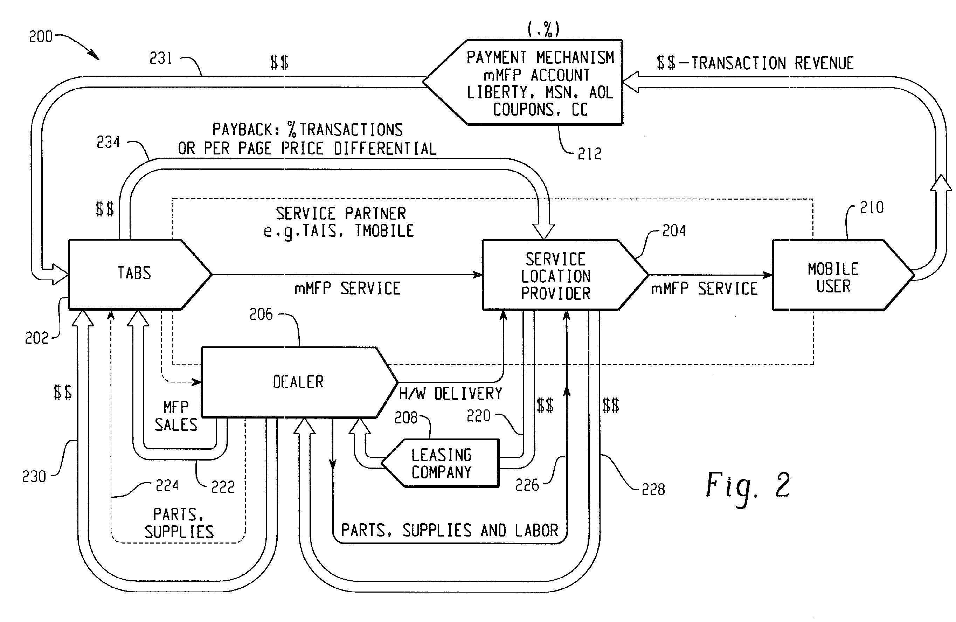

One embodiment of a system 200 for supplying multifunctional peripheral devices to service location providers for use by mobile users is shown in Figure 2. In this embodiment, the multifunctional peripheral device provider 202 sells or leases the multifunctional peripheral device, related hardware and software, parts, and supplies to a service location provider 204. Preferably, the multifunctional peripheral device provider works with a dealer 206 who buys the multifunctional peripheral device and related components and then sells it to the service location provider. Preferably, the multifunctional peripheral provider provides the software and related services to the service location provider. In one embodiment, a leasing company 208 purchases the multifunctional peripheral device from the either the multifunctional peripheral device provider or the dealer and leases it to the service location provider. Any fees related to the sale or installation of the multifunctional peripheral device is paid to the multifunctional peripheral device provider. If a dealer or leasing company is involved in the transaction, then fees are preferably paid to the dealer or the leasing company as shown by 220, and then paid to the multifunctional peripheral device provider as shown by 222. Preferably, at least a portion of these fees is paid to any dealers involved in the sale or lease of the multifunctional peripheral device (not shown).

Preferably, if a dealer is involved in the transaction, the dealer purchases parts and supplies from the multifunctional peripheral device provider as shown by 224. The dealer then provides parts, supplies, and labor and maintenance services to the service location provider as shown by 226. The service location provider pays the dealer for such parts, supplies, and labor as shown by 228 and then the dealer pays the multifunctional peripheral device provider as shown by 230. Preferably, at least a portion of these fees is paid to the dealer as a commission for the dealer's sales (not shown).

The service location provider provides access to the multifunctional peripheral device to a mobile user 210. The user uses the multifunction peripheral device for selected services and pays for the services according to various payment options as described in detail above and as referenced at 212. The fees for the mobile user's transactions are paid to the multifunctional peripheral device provider as shown by 232. Preferably, at least a portion of these fees are paid to any dealers involved in the sale or lease of the multifunctional peripheral device and to the service location providers. Preferably, the service location providers are paid a selected percentage of the transaction revenues as shown by 234 and such payments are made periodically.

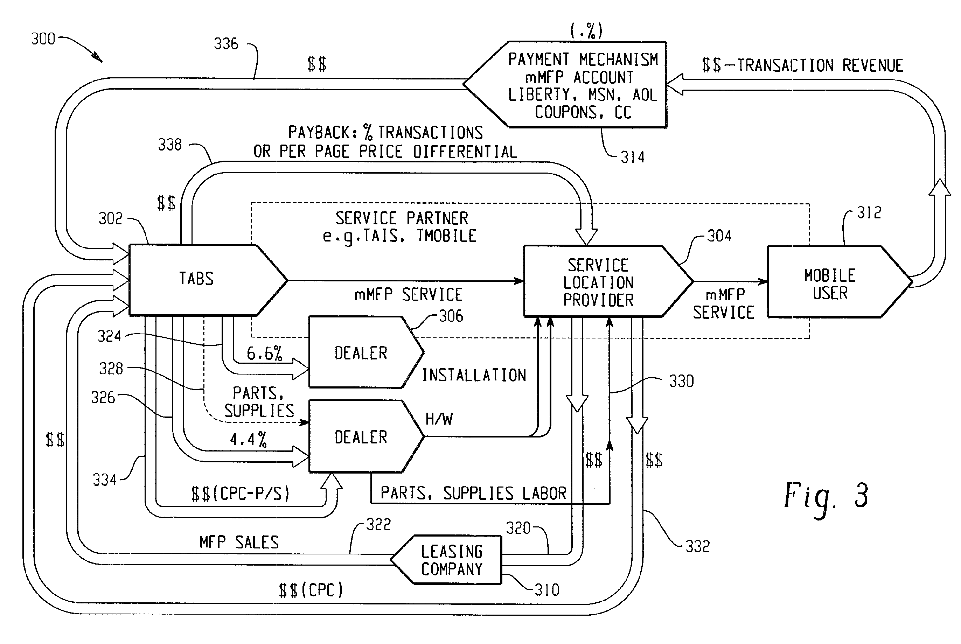

Another embodiment of a system 300 for supplying multifunctional peripheral devices to service location providers for use by mobile users is shown in Figure 3. In this embodiment, the multifunctional peripheral device provider 302 sells or leases the multifunctional peripheral device, related hardware and software, parts, and supplies to a service location provider 304. Preferably, the multifunctional peripheral device provider works with at least one of an originating dealer 306 and an installation dealer 308 who are involved in the sale of the multifunctional peripheral device and related components to the service location provider. Preferably, the originating dealing handles the ordering and sales process and the installation dealer delivers and installs the multifunctional peripheral device at the service location provider. Preferably, the multifunctional peripheral provider provides the software and related services to the service location provider. In one embodiment, a leasing company 310 purchases the multifunctional peripheral device from the either the multifunctional peripheral device provider or the dealer and leases it to the service location provider. Any fees related to the sale or installation of the multifunctional peripheral device is paid to the multifunctional peripheral device provider. If a leasing company is involved in the transaction, then fees are preferably paid to the leasing company as shown by 320, and then paid to the multifunctional peripheral device provider as shown by 322. Preferably, at least a portion of these fees is paid to any dealers involved in the sale or lease of the multifunctional peripheral device as shown by 324 and 326.

Preferably, if an installation dealer is involved in the transaction, the installation dealer purchases parts and supplies from the multifunctional peripheral device provider as shown by 328. The dealer then provides parts, supplies, and labor and maintenance services to the service location provider as shown by 330. The service location provider pays the multifunctional peripheral device provider for such parts, supplies, and labor as shown by 332. Preferably, at least a portion of these fees is paid to the installation dealer as shown by 334.

The service location provider provides access to the multifunctional peripheral device to a mobile user 312. The user uses the multifunction peripheral device for selected services and pays for the services according to various payment options as described in detail above and as referenced at 314. The fees for the mobile user's transactions are paid to the multifunctional peripheral device provider as shown by 336. Preferably, at least a portion of these fees are paid to any dealers involved in the sale or lease of the multifunctional peripheral device and to the service location providers. Preferably, the service location providers are paid a selected percentage of the transaction revenues as shown by 338 and such payments are made periodically.

Although the preferred embodiment has been described in detail, it should be understood that various changes, substitutions, and alterations can be made therein without departing from the spirit and scope of the invention as defined by the appended claims. It will be appreciated that various changes in the details, materials and arrangements of parts, which have been herein described and illustrated in order to explain the nature of the invention, may be made by those skilled in the area within the principle and scope of the invention.

## Claims

1. A system for providing fee-based access to shared data peripheral devices comprising:
a data peripheral system comprising at least one data input/output device;
data communication means adapted for placing a user-operated data device in data communication with the data peripheral system;
accounting means adapted for securing charge information from an associated user, which charge information allows for securing of payment for use of the data peripheral system;
verification means adapted for verifying the charge information received from the associated user; and
enabling means adapted for enabling operation of the data peripheral system in accordance with an output of the verification means so as to provide fee-based access of the associated user to the peripheral system.

2. The system of claim 1, wherein the data peripheral system includes at least one of a printer, facsimile, scanning device, character recognition system, storage device, and network data connection.

3. The system of claim 1 or 2, wherein the charge information includes information associated with at least one of a pre-paid debit card, coupon, and credit card.

4. The system of claim 1, 2 or 3, wherein the data communication means includes a physical connection.

5. The system of claim 1, 2 or 3, wherein the data communication means includes a wireless communication.

6. The system of claim 5, wherein the wireless communication includes at least one of a BlueTooth^{TM}, 802.11(g), and 802.11 connection.

7. The system of any preceding claim, wherein the data peripheral system further comprises a remote data processing system in communication with the data peripheral system, wherein the remote data processing system comprises the verification means.

8. The system of any preceding claim, further comprising tracking means adapted for tracking the user's usage of the data peripheral system and cost generating means adapted for receiving an output from the tracking means and generating a cost for the user's usage of the data peripheral system.

9. The system of claim 8, further comprising billing means adapted for receiving an output from the cost generating means and applying the output to the user's charge information.

10. A method for providing fee-based access to shared data peripheral devices comprising the steps of:
establishing data communication with a mobile data device;
securing charge information from a user associated with the mobile data device;
verifying the charge information;
selectively enabling access of the mobile data device to a data peripheral system in response to verification of the charge information; and
securing a fee on access of the mobile data device in accordance with usage of the data peripheral system.

11. The method of claim 10, wherein the step of enabling access further comprises the step of enabling access to data devices including at least one of a printer, facsimile, scanning device, character recognition system, storage device and network data connection.

12. The method of claim 10 or 11, wherein the charge information includes information associated with at least one of a pre-paid credit card, coupon, and credit card.

13. The method of claim 10, 11 or 12, wherein the step of establishing data communication further comprises the step of establishing data communication with the mobile data device along a physical connection.

14. The method of claim 10, 11 or 12, wherein the step of establishing data communication further comprises the step of establishing data communication with the mobile data device along a wireless connection.

15. The method of claim 14, wherein the wireless connection is provided as at least one of a BlueTooth^{TM}, 802.11(g), and 802.11 connection.

16. The method of any one of claims 10 to 15, further comprising the step of transmitting the charge information to a remote data processing system, wherein the remote data processing system performs the step of verifying the charge information.

17. The method of any one of claims 10 to 16, further comprising the step of tracking the user's usage of the data peripheral device and generating a cost for the user's usage of the data peripheral device.

18. The method of claim 17, further comprising the step of applying the cost to the user's charge information.
